# EUROPÄISCHE PATENTSCHRIFT

(11) **EP 0 939 954 B1**
(45) Veröffentlichungstag und Bekanntmachung des Hinweises auf die Patenterteilung: **28.11.2001**
(21) Anmeldenummer: 97929259.6
(22) Anmeldetag: 23.06.1997
(51) Int. Cl.: G11B 7/09

(54) **GERÄT ZUM LESEN ODER BESCHREIBEN OPTISCHER AUFZEICHNUNGSTRÄGER**
APPARATUS FOR READING OR WRITING OPTICAL RECORDING CARRIERS
APPAREIL POUR LIRE OU ENREGISTRER DES DONNEES DES SUPPORTS D'ENREGISTREMENT OPTIQUES

(30) Priorität: 06.07.1996 DE 19627383
(43) Veröffentlichungstag der Anmeldung: 08.09.1999
(73) Patentinhaber: DEUTSCHE THOMSON-BRANDT GMBH, 78048 Villingen-Schwenningen (DE)
(72) Erfinder: BÜCHLER, Christian, D-78052 Villingen-Schwenningen (DE)
(74) Vertreter: Thies, Stephan, Dipl.-Phys.
(86) Internationale Anmeldenummer: EP9703276
(87) Internationale Veröffentlichungsnummer: WO9801855

(56) Entgegenhaltungen:
- US-A- 4 785 441
- PATENT ABSTRACTS OF JAPAN vol. 015, no. 372 (P-1254), 19.September 1991 & JP 03 144923 A (MATSUSHITA ELECTRIC IND CO LTD), 20.Juni 1991,
- PATENT ABSTRACTS OF JAPAN vol. 014, no. 325 (P-1075), 12.Juli 1990 & JP 02 108245 A (MATSUSHITA ELECTRIC IND CO LTD), 20.April 1990,
- PATENT ABSTRACTS OF JAPAN vol. 014, no. 325 (P-1075), 12.Juli 1990 & JP 02 108244 A (MATSUSHITA ELECTRIC IND CO LTD), 20.April 1990,
- PATENT ABSTRACTS OF JAPAN vol. 012, no. 388 (P-771), 17.Oktober 1988 & JP 63 131334 A (MATSUSHITA ELECTRIC IND CO LTD), 3.Juni 1988,

## Beschreibung

Die vorliegende Erfindung betrifft ein Gerät zum Lesen und/oder Beschreiben optischer Aufzeichnungsträger mit einem vier Bereiche aufweisenden Detektor, auf den ein vom Aufzeichnungsträger her kommender Lichtstrahl fällt, einem Phasendetektor, an dessen Eingängen die Summensignale je zweier der Bereiche des Photodetektors anliegen, und an dessen Ausgang ein Spurfehlersignal abgreifbar ist.

Ein derartiges Gerät ist aus der US 4,497,048 bekannt. Bei diesem bekannten Gerät ist ein Photodetektor vorgesehen, welcher in vier Bereiche aufgeteilt ist. Eine Spurhalteinformation wird dadurch gewonnen, daß die Signale jeweils zweier Bereiche zu einem Summensignal zusammengefaßt werden, und daß eine Phasendifferenz zwischen dem ersten und dem zweiten Summensignal so festgestellt wird, daß es nicht notwendig ist, die Amplitude des reproduzierten Signals zu erfassen. Dieses Gerät funktioniert zufriedenstellend, wenn der auszulesende optische Aufzeichnungsträger eine wohldefinierte und konstante Geometrie der informationstragenden Schicht aufweist. Insbesondere ist es erforderlich, daß die zur Informationsspeicherung dienenden Vertiefungen der informationstragenden Schicht, die sogenannten Pits, eine im Verhältnis zur Wellenlänge des zum Auslesen verwendeten Lichts konstante Tiefe aufweisen.

Nachteilig an dem bekannten Gerät ist, daß nur geringe Variationen in der Geometrie der Pits toleriert werden, und daß größere Abweichungen zu Fehlern bei der Bildung der Spurhalteinformation führen. Dies führt dazu, daß hohe Fehlerraten beim Auslesen des optischen Aufzeichnungsträgers auftreten oder im Extremfall ein derartiges Auslesen völlig unmöglich wird.

Aus der US-A-4,785,441 ist ein entsprechendes Gerät bekannt, welches einstellbare Verzögerungsglieder aufweist, die zwei der vier Bereiche zugeordnet sind. Nachteilig an diesem Gerät ist anzusehen, daß auch hier Probleme beim Abtasten unterschiedlicher Informationsträger auftreten können.

Aufgabe der vorliegenden Erfindung ist es, ein bekanntes Gerät dahingehend zu verbessern, daß es problemlos auch für optische Aufzeichnungsträger unterschiedlicher Pittiefe bzw. Pitgeometrie Verwendung finden kann.

Erfindungsgemäß wird dies dadurch erreicht, daß zumindest eines der Verzögerungsglieder unabhängig von dem anderen einstellbar ist. Dies hat den Vorteil, daß ein zeitlicher Abgleich der Bereiche des Photodetektors relativ zueinander möglich ist. Da der Photodetektor ein von den auf dem optischen Aufzeichnungsträger angeordneten Pits hervorgerufenes Interferenzmuster empfängt, welches in Abhängigkeit von der Platten- und der Spurgeometrie (Pittiefe usw.), dem Plattentyp und der Exemplarstreuungen sowie der Alterung des Laserabtasters variieren kann, variiert auch die zeitliche Beziehung der Detektorsignale zueinander. Der erfindungsgemäß mögliche zeitliche Abgleich der Detektorsignale zueinander ermöglicht es, derartige Variationen auszugleichen. Der zeitliche Abgleich kann dabei über zwei, je einem Bereich des Photodetektors zugeordnete, unabhängig voneinander einstellbare Verzögerungsglieder erfolgen. Ein wesentlich besserer Abgleich ist allerdings möglich, wenn mehreren, bzw. jedem der Bereiche ein Verzögerungsglied zugeordnet ist, von denen zumindest eines unabhängig von den anderen einstellbar ist. Die größte Flexibilität wird ermöglicht, wenn jedem der Bereiche ein Verzögerungsglied zugeordnet ist, von denen zumindest eines unabhängig von den anderen einstellbar ist. Ist jedem bis auf einen der Bereiche ein Verzögerungsglied zugeordnet, so können alle mit Verzögerungsglied versehenen Bereiche auf denjenigen Bereich ohne Verzögerungsglied abgeglichen werden. Es ist auch möglich, die Bereiche in Gruppen zusammenzufassen, jeder Gruppe ein Verzögerungsglied zuzuordnen und die Gruppen gegeneinander abzugleichen. Besteht ein Bereich aus mehreren Einzelbereichen, so kann jedem dieser Einzelbereiche ein Verzögerungsglied zugeordnet sein.

Die Einstellung der Verzögerungsglieder kann extern erfolgen, beispielsweise bei der Produktion des Gerätes oder bei der Durchführung eines Geräteservices.

Erfindungsgemäß ist vorgesehen, daß Steuermittel zum Einstellen der Verzögerungszeit des bzw. der Verzögerungsglieder vorhanden sind. Dies hat den Vorteil, daß ein Abgleich der Verzögerungsglieder jederzeit möglich ist.

Beispielsweise kann jedesmal nach Einlegen eines neuen optischen Aufzeichnungsträgers, in bestimmten zeitlichen Abständen, z.B. während kurzer Unterbrechungen des Abspiel-oder Schreibbetriebs eines optischen Aufzeichnungsträgers oder in auf andere Art geeignet definierten Abständen ein Abgleich durchgeführt werden. Eine Möglichkeit des Abgleichs besteht darin, daß feste Verzögerungszeiten, die auf den Typ des optischen Aufzeichnungsträgers abgestimmt sind, eingestellt werden. Der Typ des Aufzeichnungsträgers wird dabei durch die Pittiefe bzw. die Pitgeometrie, die Spurbreite oder ähnliche charakteristische Eigenschaften festgelegt. Hierbei kann es sich um die bekannte Audio-CD oder neue optische Aufzeichnungsträger hoher Aufzeichnungsdichte (sogenannte DVD) handeln. Es ist ebenfalls möglich, die Verzögerungszeiten in einer Art "try-and-error-Verfahren" bezüglich der Ausgangseinstellungen zu variieren und den neuen Wert dann beizubehalten, wenn das Spurführungsverhalten besser wird. Bei verschlechtertem Spurführungsverhalten werden die Verzögerungszeiten wieder auf die vorhergehende Einstellung zurückgesetzt.

Weiterhin ist vorgesehen, ein Phasendetektionsmittel zum Erkennen der Phasenlage der von den Bereichen des Photodetektors abgegebenen Signale vorzusehen. Dies hat den Vorteil, daß der Abgleich optimal möglich ist, da die genaue Phasenlage ermittelt wird und somit die Verzögerungszeiten der Verzögerungsglieder exakt eingestellt werden können.

Eine weitere Ausgestaltungsform der Erfindung sieht vor, eine Schaltungsanordnung zur Beaufschlagung eines Phasenlagendetektors mit einer Kombination der Ausgangssignale der Bereiche vorzusehen. Dies hat den Vorteil, daß die Phasenlagen der einzelnen Signale von einem einzigen Phasenlagendetektor ausgewertet werden, indem die Signale der einzelnen Bereiche des Photodetektors über die Schaltungsanordnung sukzessive an den Phasenlagendetektor gegeben werden. Die Schaltungsanordnung, beispielsweise ein Multiplexer, ist vorteilhafterweise in das Gerät eingebaut, so daß eine interne Bestimmung der Phasenlage möglich ist. Dies ist aber auch für eine externe Bestimmung der Phasenlage von Vorteil, da in diesem Fall kein unnötig großer Kontaktierungsaufwand erforderlich ist.

Die Schaltungsanordnung wird vorteilhafterweise von einem Steuermittel, z.B. einem Mikro-Controller, geschaltet. Erfindungsgemäß ist es ebenfalls möglich, nach einem bestimmten zeitlichen Takt oder einem auf andere Art getriggerten Takt zu schalten.

Eine vorteilhafte Weiterbildung der Erfindung besteht darin, daß der Phasenlagendetektor der Phasendetektor des Gerätes ist. Dies hat den Vorteil, daß kein zusätzliches Bauteil erforderlich ist, und daß ohnehin vorhandene Funktionsgruppen des Gerätes optimal genutzt werden.

In Weiterbildung der Erfindung ist vorgesehen, einen Mikro-Controller einzusetzen, der sowohl die Schaltungsanordnung als auch die Einstellung der Verzögerungszeit der Verzögerungsglieder steuert. Dies hat den Vorteil, daß die Steuerung über ein kostengünstig zu integrierendes Bauteil, welches flexibel an geänderte Randbedingungen anpaßbar ist, erfolgt. Statt eines Mikro-Controllers kann auch eine Logikschaltung vorteilhaft eingesetzt werden.

Eine vorteilhafte Weiterbildung der Erfindung besteht darin, einen Tiefpaß am Ausgang des Phasendetektors anzuordnen. Dies hat den Vorteil, daß auf diese Weise ein gemitteltes Gleichstromsignal abgegeben wird, wodurch eine automatische Einstellung der Verzögerungszeit möglich ist, auch ohne daß der den optischen Aufzeichnungsträger abtastenden Lichtstrahl einer Spur folgt. Die auf den Detektor treffenden Lichtimpulse müssen in diesem Fall nicht von einer Datenspur stammen, es können durchaus auch die Signale sein, die beim zufälligen Überqueren der Spuren auftreten. Auf diese Weise ist ein schnelles Einstellen der Verzögerungszeiten möglich bevor der eigentliche Abspielbzw. Aufzeichnungsbetrieb beginnt. Da der Phasendetektor in dieser Zeit ohnehin nicht zur Spurführung benötigt wird, ist auch kein Umschalten zwischen den Funktionen Spurführen und Phasenabgleich der Verzögerungsglieder erforderlich.

Der Abgleich von einstellbaren Verzögerungsgliedern des erfindungsgemäßen Gerätes wird vorteilhafterweise nach dem in Anspruch 8 beschriebenen Verfahren durchgeführt. Dies hat den Vorteil, daß Phasendifferenzen, die durch Bauteileigenschaften hervorgerufen sind, auf einfache und kostengünstige Weise ausgeglichen werden. Das Gerät ist nach Durchführung des Verfahrens mit optimal angepaßten Einstellungen versehen, die beibehalten werden bis gegebenenfalls ein erneuter Abgleich notwendig oder wünschenswert ist. Das beschriebene Verfahren kann sowohl bei der Produktion zum optimalen Einstellen des Gerätes dienen, als auch während dessen Betrieb zum Justieren angewandt werden. Letzteres kann sowohl manuell, z.B. während eines Serviceaufenthaltes, als auch automatisch, z.B. in bestimmten Zeitabständen, erfolgen.

Es ist vorgesehen, die einstellbaren Verzögerungsglieder vor dem ersten Verfahrensschritt des erfindungsgemäßen Verfahrens auf minimale Verzögerungszeit einzustellen. Dies hat den Vorteil, daß die Verzögerungsglieder des Bereiches mit dem zeitlich letztliegenden Signal nicht verändert zu werden brauchen, und daß für diejenigen der anderen Verzögerungsglieder der maximal mögliche Spielraum zur Verfügung steht.

Das erfindungsgemäße Verfahren kann auch dann vorteilhaft eingesetzt werden, wenn noch keiner Spur gefolgt wird. In diesem Fall stammen die auf den Detektor fallenden Lichtimpulse von zufällig überquerten Spuren. Dies ist aber für die Einstellung der Verzögerungszeiten nach dem erfindungsgemäßen Verfahren unerheblich, da die zeitliche Abfolge der Signale der einzelnen Detektorelemente bei sich drehendem Aufzeichnungsträger aber noch geöffnetem Spurregelkreis derjenigen bei geschlossenem Regelkreis nahezu gleich ist. Mittels des erfindungsgemäßen Verfahrens kann also bereits vor dem Schließen des Spurregelkreises ein optimaler Abgleich der Verzögerungszeiten erfolgen, was das anschließende Schließen des Spurregelkreises wesentlich erleichtert, da dazu keine fehlerbehafteten Signale herangezogen zu werden brauchen.

In Anspruch 10 ist eine Ausführungsform des erfindungsgemäßen Verfahrens beschrieben, die den Vorteil hat, besonders einfach ausführbar zu sein. Das erfindungsgemäße Gerät findet Verwendung als Abspiel- oder Aufzeichnungsgerät für optische Aufzeichnungsträger wie zum Beispiel CD, CD-ROM, CD-I, CD-R, DVD, DVD-ROM, DVD-R etc.

Die in den einzelnen Ansprüchen genannten Merkmale können sinnvollerweise auch in Kombination miteinander Anwendung finden. Weitere Vorteile des erfindungsgemäßen Gerätes und des erfindungsgemäßen Verfahrens können der nachfolgenden Beschreibung entnommen werden.

Dabei zeigen:
- Fig. 1: eine schematische Darstellung eines erfindungsgemäßen Gerätes und
- Fig. 2: ein Flußdiagramm zum erfindungsgemäßen Verfahren.

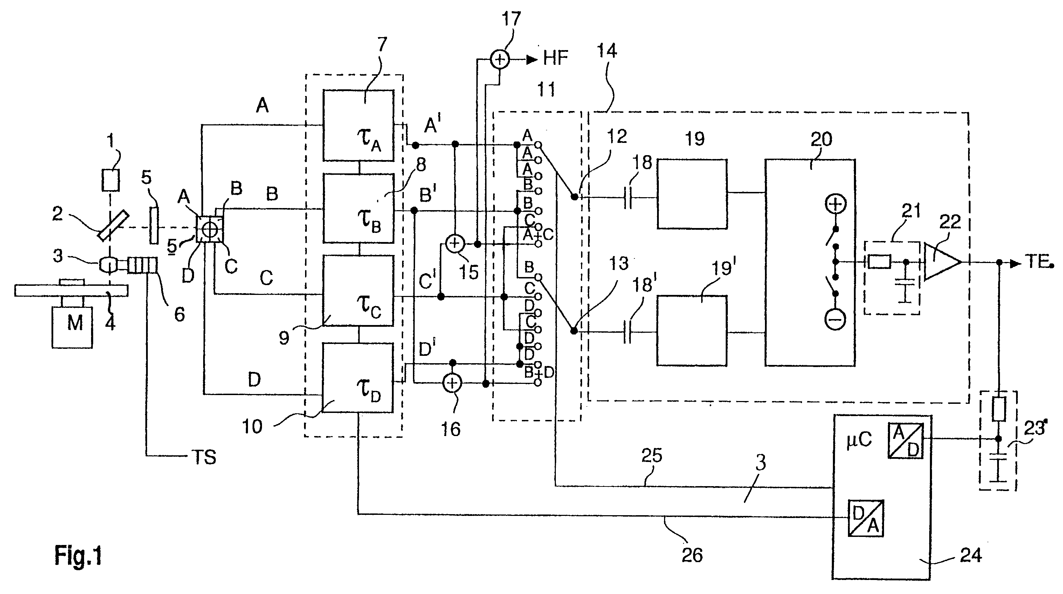

In Fig. 1 ist das erfindungsgemäße Gerät schematisch dargestellt. Eine Lichtquelle 1 erzeugt einen Lichtstrahl, der durch einen halbdurchlässigen Spiegel 2 und eine Objektivlinse 3 auf den optischen Aufzeichnungsträger 4 fällt. Von dort wird er reflektiert und gelangt durch die Objektivlinse 3 zum Spiegel 2, von wo er auf den Detektor 5 gelenkt wird. Der Detektor 5 ist sowohl in Seitenansicht (links) als auch in einer um 90° gedrehten Aufsicht (rechts) dargestellt. In dieser Darstellung erkennt man, daß der Detektor 5 aus vier Bereichen A, B, C und D besteht.

Der optische Aufzeichnungsträger 4 wird mittels eines Motors M in rotierende Bewegung versetzt. Auf dem optischen Aufzeichnungsträger 4 sind Vertiefungen, sogenannte Pits, in einer spiralförmig verlaufenden Spur angeordnet. Die Objektivlinse 3 dient dazu, den Lichtstrahl auf den optischen Aufzeichnungsträger 4 zu fokussieren. Sie kann dazu mittels eines Antriebs 6 in ihrem Abstand zum optischen Aufzeichnungsträger 4 verstellt werden. Zum Nachfolgen der Spur, d.h. zum Spurführen, kann die Objektivlinse 3 vom Antrieb 6 in bzgl. des optischen Aufzeichnungsträgers 4 radialer Richtung verschoben werden. Der Antrieb 6 wird dazu mittels eines Spurführungssignals TS beaufschlagt.

Die Ausgangssignale der Bereiche A, B, C bzw. D werden Verzögerungsgliedern 7, 8, 9 bzw. 10 zugeführt. Die Verzögerungsglieder 7, 8, 9 bzw. 10 weisen variabel einstellbare Verzögerungszeiten τ_{A}, τ_{B}, τ_{C} bzw. τ_{D} auf. Am Ausgang der Verzögerungsglieder 7, 8, 9 bzw. 10 liegen dann die verzögerten Signale A', B', C' bzw. D' an. Diese werden einer Schaltungsanordnung 11 zugeführt, deren beide Ausgänge 12 und 13 einem Phasendetektor 14 zugeführt werden.

Die Signale A' und C' werden zusätzlich einem ersten Summierer 15 zugeführt, dessen Ausgangssignal der Schaltungsanordnung 11 zugeführt wird. Die Signale B' und D' werden entsprechend einem zweiten Summierer 16 zugeführt, dessen Ausgangssignal ebenfalls der Schaltungsanordnung 11 zugeführt wird. Weiterhin werden die Ausgangssignale des ersten Summierers 15 und des zweiten Summierers 16 einem dritten Summierer 17 zugeführt, dessen Ausgangssignal das Informationssignal HF darstellt. Die weitere Verarbeitung des Signals HF wird hier nicht näher beschrieben, da sie in der dem Fachmann bekannter Weise erfolgt.

Der Hochfrequenzanteil des am Ausgang 12 anliegenden Signals wird über eine Kapazität 18 einem Wandler 19 zugeführt. Dieser Wandler 19 wandelt das analoge Eingangssignal in ein zwei mögliche Zustände aufweisendes Rechtecksignal um. Dieses Rechtecksignal entspricht im wesentlichen der Information "Licht fällt auf die entsprechenden Bereiche des Photodetektors" oder "kein Licht fällt auf diese Bereiche", d.h. im wesentlichen dem analogen Eingangssignal. Derartige Wandler werden auch als "Data-Slicer" bezeichnet. Entsprechendes gilt für das am Ausgang 13 anliegende Signal, welches die Kapazität 18' und den Wandler 19'durchläuft. Das von den Wandlern 19, 19' abgegebene digitalisierte Signal wird einem Phasenvergleicher 20 zugeführt. Ist die Phasenlage dieser Eingangssignale gleich, so ist das Ausgangssignal des Phasenvergleichers 0, liegt eine Phasenverschiebung vor, so weicht das Ausgangssignal des Phasenvergleichers 20 in positive oder negative Richtung von 0 ab und zwar um so mehr, je größer die zeitliche Phasenverschiebung der Eingangssignale ist. Das Ausgangssignal des Phasenvergleichers 20 wird mittels eines Tiefpaßfilters 21, dessen Eckfrequenz im Ausführungsbeispiel bei etwa 50 kHz liegt, gefiltert und mittels eines Verstärkers 22 verstärkt als Spurfehlersignal TE abgegeben.

Das Signal TE wird in einem weiteren Tiefpaßfilter 23, dessen Grenzfrequenz wesentlich niedriger liegt, im Ausführungsbeispiel bei etwa 10 Hz, gefiltert und einem als Steuermittel dienenden Mikro-Controller 24 zugeführt. Der Mikro-Controller 24 steuert sowohl die Schaltungsanordnung 11 über eine Leitung 25 als auch die Verzögerungsglieder 7 bis 10 über eine Leitung 26. Im Ausführungsbeispiel ist die Leitung 25 eine 3-Bit Datenleitung, während die Leitung 26 als serielle Datenleitung ausgelegt ist, die je Verzögerungsglied 7, 8, 9 bzw. 10 ein Steuersignal bedarfsgerechter Auflösung überträgt.

Die Schaltungsanordnung 11 ist im Ausführungsbeispiel als Multiplexer ausgeführt, der zweimal sieben Eingänge mit zwei Ausgängen verbindet. Zum Spurführen werden die in der Zeichnung jeweils unten dargestellten Eingänge A+C bzw. B+D mit den Ausgängen 12 bzw. 13 verbunden.

Eine Abweichung des den optischen Aufzeichnungsträger 4 auslesenden Lichtstrahls von der Spurmitte bewirkt, daß das Beugungsbild, welches auf den Detektor 5 fällt, eine unsymmetrische Verteilung einnimmt, wodurch sich die Signale A+C und B+D in ihrer Phasenlage unterscheiden. Das Ausgangssignal TE weicht um so mehr von 0 ab, je größer die Abweichung des Lichtstrahls von der Spurmitte und somit die Verschiebung der Phasenlagen der Signale A+C und B+D relativ zueinander ist. Ein hier nicht dargestellter Regler ermittelt daraus einen Spurführungssollwert, der als Signal TS an den Antrieb 6 weitergeleitet wird.

Die Verzögerungsglieder 7 bis 10 sind vorgesehen, um einen zeitlichen Abgleich der von den Bereichen A, B, C und D abgegebenen Signale untereinander zu ermöglichen. Dabei ist es günstig, die zeitlich vorlaufenden Detektorsignale auf das jeweils zeitlich gesehen letzte Signal abzugleichen, so daß die relative Phasenverschiebung zueinander zu 0° wird. Dann erhält man die beste, rauschärmste Signalquellenqualität für das Spurfehlersignal TE. Die genannte Methode zur Ermittlung des Spurfehlersignals TE wird "Differential Phase Detection" Methode (DPD) genannt. Da die auftretenden Verzögerungen der einzelnen Bereiche A bis D des Detektors relativ zueinander von der Spurtiefe und der Geometrie des optischen Aufzeichnungsträgers sowie von der linearen Abtastgeschwindigkeit abhängig sind, welche für verschiedene Typen optischer Aufzeichnungsträger 4 unterschiedliche sein kann, erfolgt der Abgleich der Verzögerungsglieder 7 bis 10 bei jedem Wechsel des optischen Aufzeichnungsträgers neu. Ausgehend von dem vorhandenen Phasendetektor 14 zur Erzeugung des Spurfehlersignals TE mittels der DPD-Methode aus den Summensignalen A+C und B+D wird mit geringem Aufwand der Phasendetektor 14 ebenfalls zur Ermittlung der Reihenfolge der auftretenden Detektorsignale der Bereiche A bis D und zum automatischen Abgleich der Verzögerungsglieder verwendet.

Die zeitliche Reihenfolge der Detektorsignale der Bereiche A bis D zueinander wird wie folgt ermittelt: Die Signale A, B, C und D werden untereinander verglichen um deren Phasenlage zueinander feststellen zu können. Es sind sechs Verknüpfungen nötig, um das der zeitlichen Reihenfolge nach letztauftretende Signal sicher feststellen zu können. Die Verknüpfungen sind A und B, A und C, A und D, B und C, B und D sowie C und D. Der Multiplexer der Schaltungsanordnung 11 ermöglicht es, je nach Schalterstellung, alle der genannten Vergleichskombinationen auf die Eingänge des Phasendetektors 14 zu schalten. Mit Hilfe eines zusätzlichen Tiefpaßfilters 23, welches beispielsweise auch im Mikro-Controller 24 zum Beispiel als FIR-Filter realisiert sein kann, kann der mittlere Gleichspannungsanteil des Ausgangssignals des Phasendetektors 14 ermittelt werden. Zunächst werden alle Verzögerungsglieder 7 bis 10 auf kleinstmögliche Verzögerung gestellt, d.h. τ_{A} = τ_{B} = τ_{C} = τ_{D} = 0. Werden nun zwei Eingangssignale unterschiedlicher Phasenlage auf den Phasendetektor 14 gegeben und der mittlere Gleichspannungsanteil an dessen Ausgang gemessen, so ergibt sich eine von Null abweichende Spannung, die je nach Phasenlage positiv oder negativ ist. Die Entscheidung über die Phasenlage kann zum Beispiel mittels eines Software-Komparators erfolgen, dessen Vergleichslevel bei 0 Volt liegt. Da zunächst nur die zeitliche Reihenfolge der Detektorsignale der Bereiche A bis D durch wechselweises Abfragen ermittelt werden soll, kann die Abfrage recht schnell erfolgen. Es muß nicht das Einschwingen des Tiefpasses 23 abgewartet werden. Lediglich die Tendenz (größer oder kleiner als 0) muß erkennbar sein. Nachdem durch wechselweises Abfragen in geeigneter Form, per Software oder per Zustandsmaschine, im Ausführungsbeispiel im Mikro-Controller 24, das zeitlich gesehen letzte Signal ermittelt worden ist, erfolgt der eigentliche Abgleich der Verzögerungsglieder 7 bis 10.

Dieser Abgleich läuft wie folgt ab: Da das zeitlich letzte Signal bereits ermittelt ist, ist es leicht möglich, in drei aufeinander folgenden Schritten die drei anderen, vorlaufenden Signale auf das zeitlich gesehen letzte Signal zu verschieben. Kriterium für die erfolgreiche Verschiebung ist wiederum der mittlere Gleichspannungsanteil am Ausgang des Phasendetektors 14. Die zeitlich vorlaufenden Signale werden hintereinander mit dem zeitlich letzten Signal verglichen und die Verzögerungsszeit τ des jeweils vorlaufenden Signals wird so lange erhöht, bis der mittlere Gleichspannungsanteil am Ausgang des Phasendetektors 14 den Wert Null erreicht. Dieser Vorgang wird mit Hilfe des Mikro-Controllers 24 durchgeführt, wobei die Spannungswerte mit einem Software-Komparator auf 0 Volt verglichen werden. Die Verzögerungszeiten τ_{A}, τ_{B}, τ_{C} und τ_{D} der Verzögerungsglieder 7 bis 10 können dabei kontinuierlich oder in kleinen Schritten durch den Mikro-Controller 24 verstellt werden. Wenn alle Signale so verschoben sind, daß ihre relative Phasenlageübereinstimmt, wird das Spurfehlersignal TE aus den Summen der Signale A'+C' und B'+D' gewonnen. Die erfindungsgemäße automatische Abgleichmethode hat den Vorteil, daß Einflüsse auf die zeitliche Beziehung der Detektorsignale zueinander, die von Platten- und Spurgeometrie, Plattentyp, Exemplarstreuung des Laserabtasters, d.h. der optischen Einrichtung (1 bis 5) sowie der Lineargeschwindigkeit, d.h. der Geschwindigkeit des optischen Aufzeichnungsträgers an dem Ort, an dem der Lichtstrahl sich gerade befindet, abhängig ist, ausgeglichen werden.

Weiterhin ist es möglich, mit geringem zusätzlichen Aufwand (Verzögerungsglieder 7 bis 10, Schaltungsanordnung 11 und Tiefpaßfilter 23) unter Einbeziehung einer Logikschaltung oder, wie dargestellt, eines Mikro-Controllers 24 die zeitliche Beziehung der Detektorsignale der Bereiche A bis D zueinander zu ermitteln und mittels der Verzögerungsglieder 7 bis 10 zueinander zu verschieben.

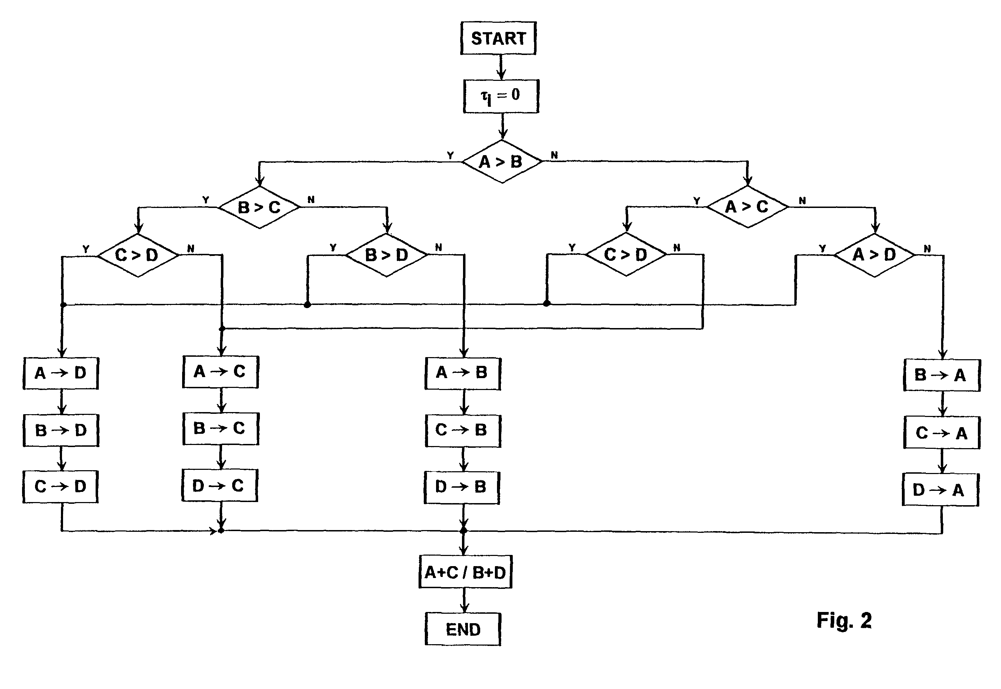

Fig. 2 zeigt ein Flußdiagramm des Verfahrens zum automatischen Abgleich der einstellbaren Verzögerungsglieder 7 bis 10. Nach dem Start werden alle Verzögerungszeiten τ_{A}, τ_{B}, τ_{C} und τ_{D} zu Null gesetzt. Anschließend werden die Phasenlagen der Signale A und B miteinander verglichen. Der Multiplexer steht in diesem Fall in der abgebildeten Schaltstellung. Eilt das Signal A dem Signal B voraus, so wird der linke Ast beschritten, andernfalls der rechte. Das jeweils nacheilende Signal B bzw. A wird dann mit dem Signal C verglichen. Dies entspricht der vierten bzw. der zweiten Schalterstellung der Schaltungsanordnung 11 von oben. Das in diesem zweiten Vergleichsschritt als nacheilend ermittelte Signal wird anschließend mit dem Signal D verglichen.

Nach diesem dritten Vergleich steht fest, welches Signal zeitlich am meisten zurückliegt. In drei aufeinanderfolgenden Schritten werden die Verzögerungszeiten τᵢ der Verzögerungsglieder der jeweils anderen Signale eingestellt. In der Fig. 2 ganz links ist dies für den Fall dargestellt, daß Signal D am weitesten nacheilt. Zunächst wird τ_{A} so lange abgeglichen, bis die Signale A' und D phasengleich sind, dann wird τ_{B} und im Anschluß daran τ_{C} entsprechend abgeglichen. Rechts davon ist der Fall dargestellt, daß Signal C am weitesten nacheilt. In diesem Fall werden τ_{A}, τ_{B} und τ_{D} entsprechend abgeglichen. Rechts davon ist der Fall dargestellt, daß Signal B am weitesten nacheilt und ganz rechts der Fall, daß Signal A am weitesten nacheilt. Nachdem die jeweils anderen drei Verzögerungszeiten τᵢ eingestellt sind, wird der Multiplexer der Schaltungsanordnung 11 in seine in der Abbildung als unterste dargestellte Schaltposition gestellt. Somit werden die Summensignale A+C und B+D dem Phasendetektor 14 zugeführt, um das Spurfehlersignal TE zu erzeugen. Der Einstellvorgang der Verzögerungsglieder 7 bis 10 ist damit beendet.

## Patentansprüche

1. Gerät zum Lesen oder Beschreiben optischer Aufzeichnungsträger (4) mit einem vier Bereiche (A, B, C, D) aufweisenden Detektor (5), auf den ein vom optischen Aufzeichnungsträger (4) her kommender Lichtstrahl fällt, einstellbaren Verzögerungsgliedern (7, 8, 9, 10), die zwei der vier Bereiche (A, B, C, D) zugeordnet sind, einem Phasendetektor (14), an dessen Eingängen die Summensignale je zweier der Bereiche (A, B, C, D) des Photodetektors (5) anliegen, und an dessen Ausgang ein Spurfehlersignal (TE) abgreifbar ist, **dadurch gekennzeichnet, daß** zumindest eines der Verzögerungsglieder (7, 8, 9, 10) unabhängig von dem anderen einstellbar ist.

2. Gerät nach Anspruch 1, **dadurch gekennzeichnet, daß** ein Steuermittel (24) zum Einstellen des bzw. der Verzögerungsglieder (7, 8, 9, 10) vorhanden ist.

3. Gerät nach Anspruch 1, **dadurch gekennzeichnet, daß** ein Phasendetektionsmittel zum Erkennen der Phasenlagen der von den Bereichen (A, B, C, D) des Photodetektors (5) abgegebenen Signale vorhanden ist.

4. Gerät nach Anspruch 1, **dadurch gekennzeichnet, daß** eine Schaltungsanordnung (11) zur Beaufschlagung eines Phasenlagendetektors mit einer variablen Kombination der Ausgangssignale der Bereiche (A, B, C, D) des Photodetektors (5) vorhanden ist.

5. Gerät nach Anspruch 4, **dadurch gekennzeichnet, daß** der Phasenlagendetektor der Phasendetektor (14) des Gerätes ist.

6. Gerät nach Anspruch 5, **dadurch gekennzeichnet, daß** ein Mikro-Controller (24) vorhanden ist, der die Schaltungsanordnung (11) und die Einstellung der Verzögerungsglieder (7, 8, 9, 10) steuert.

7. Gerät nach Anspruch 5, **dadurch gekennzeichnet, daß** am Ausgang des Phasendetektors (14) ein Tiefpaß (23) angeordnet ist.

8. Verfahren zum Abgleich einstellbarer Verzögerungsglieder (7, 8, 9, 10) eines Gerätes zum Lesen und/oder Beschreiben optischer Aufzeichnungsträger, die bestimmten Bereichen (A, B, C, D) des Photodetektors (5) des Geräts zugeordnet sind, wobei in einem ersten Verfahrensschritt die Phasenlage der von den einzelnen Bereichen (A, B, C, D) abgegebenen Signale verglichen werden und in einem zweiten Verfahrensschritt die Verzögerungszeiten (τ_{A}, τ_{B}, τ_{C}, τ_{D}) der Verzögerungsglieder (7, 8, 9, 10) so lange verändert werden, bis die Phasen aller Signale mit derjenigen des zeitlich letzten Signals übereinstimmen und diese veränderten Verzögerungszeiten (τ_{A}, τ_{B}, τ_{C}, τ_{D}) als optimierte Einstellwerte des Geräts beibehalten werden.

9. Verfahren nach Anspruch 8, wobei die einstellbaren Verzögerungsglieder (7, 8, 9, 10) vor dem ersten Verfahrensschritt auf minimale Verzögerungszeit (τᵢ = 0) eingestellt werden.

10. Verfahren nach Anspruch 8, wobei im ersten Verfahrensschritt zunächst die Phasen der Signale der Bereiche A und B verglichen werden, und wenn die Phase von A vor derjenigen von B liegt, die Phasen der Signale der Bereiche B und C, andernfalls diejenigen von A und C verglichen werden, liegt dabei die Phase von B bzw. A vor derjenigen von C, so werden die Phasenlagen von C und D miteinander verglichen, andernfalls werden die Phase von B bzw. A mit derjenigen von D verglichen, wobei am Ende dieser Vergleiche das zeitlich gesehen letzte Signal feststeht, auf dessen Phasenlage dann die anderen Signale durch Veränderung der Verzögerungszeit (τ_{A}, τ_{B}, τ_{C}, τ_{D}) der Verzögerungsglieder (7, 8, 9, 10) entsprechend dem zweiten Verfahrensschritt eingestellt werden.

11. Gerät nach Anspruch 1, **dadurch gekennzeichnet, daß** zumindest drei der vier Bereiche ein Verzögerungsglied(7, 8, 9, 10) zugeordnet ist.

## Claims

1. Device for reading from or writing to optical recording media (4), having a detector (5), which has four areas (A, B, C, D) and onto which there falls a light beam coming from the optical recording medium (4), delay elements (7, 8, 9, 10), which are able to be set and are assigned to two of the four areas (A, B, C, D), and a phase detector (14), at whose inputs the summation signals of in each case two of the areas (A, B, C, D) of the photodetector (5) are present and at whose output a track error signal (TE) can be picked off, **characterized in that** at least one of the delay elements (7, 8, 9, 10) can be set independently of the others.

2. Device according to Claim 1, **characterized in that** a control means (24) for setting the delay element or elements (7, 8, 9, 10) is present.

3. Device according to Claim 1, **characterized in that** a phase detection means for detecting the phase angles of the signals emitted by the areas (A, B, C, D) of the photodetector (5) is present.

4. Device according to Claim 1, **characterized in that** a circuit arrangement (11) for applying a variable combination of the output signals of the areas (A, B, C, D) of the photodetector (5) to a phase angle detector is present.

5. Device according to Claim 4, **characterized in that** the phase angle detector is the phase detector (14) of the device.

6. Device according to Claim 5, **characterized in that** a microcontroller (24) is present, which controls the circuit arrangement (11) and the setting of the delay elements (7, 8, 9, 10).

7. Device according to Claim 5, **characterized in that** a low-pass filter (23) is arranged at the output of the phase detector (14).

8. Method for adjusting delay elements (7, 8, 9, 10), which are able to be set, of a device for reading from and/or writing to optical recording media, which delay elements are assigned to specific areas (A, B, C, D) of the photodetector (5) of the device, in a first method step the phase angle of the signals emitted by the individual areas (A, B, C, D) being compared, and in a second method step the delay times (τ_{A}, τ_{B}, τ_{C}, τ_{D} ) of the delay elements (7, 8, 9, 10) being altered until the phases of all the signals coincide with that of the chronologically last signal, and these altered delay times (τ_{A}, τ_{B}, τ_{C}, τ_{D} ) being retained as optimized set values of the device.

9. Method according to Claim 8, in which the delay elements (7, 8, 9, 10) which are able to be set are set to a minimum delay time (τᵢ = 0) prior to the first method step.

10. Method according to Claim 8, in which the phases of the signals of the areas A and B are first of all compared in the first method step and, if the phase of A leads that of B, the phases of the signals of the areas B and C are compared, otherwise those of A and C are compared; if the phase of B and A, respectively, leads that of C, then the phase angles of C and D are compared with one another, otherwise the phase of B and A, respectively, is compared with that of D, the chronologically last signal being evident at the end of these comparisons, the other signals then being set to the phase angle of the said chronologically last signal by altering the delay time (τ_{A}, τ_{B}, τ_{C}, τ_{D} ) of the delay elements (7, 8, 9, 10) in accordance with the second method step.

11. Device according to Claim 1, **characterized in that** a delay element (7, 8, 9, 10) is assigned to at least three of the four areas.

## Revendications

1. Appareil pour lire ou enregistrer des données des supports d'enregistrement optiques (4) avec un détecteur (5) présentant quatre plages (A, B, C, D), sur lequel arrive un faisceau lumineux provenant du support d'enregistrement optique (4), avec des éléments de temporisation réglables (7, 8, 9, 10), qui sont affectés à deux des quatre plages (A, B, C, D), avec un comparateur de phase (14), aux entrées duquel les signaux cumulés de deux des plages (A, B, C, D) du photodétecteur (5) sont appliqués et à la sortie duquel un signal d'erreur de piste (TE) peut être prélevé, **caractérisé en ce que** au moins un des éléments de temporisation (7, 8, 9, 10) peut être réglé indépendamment des autres.

2. Appareil selon la revendication 1, **caractérisé en ce que** un dispositif de commande (24) pour le réglage du ou des éléments de temporisation (7, 8, 9, 10), selon le cas, est présent.

3. Appareil selon la revendication 1, **caractérisé en ce que** un dispositif de comparaison, de phase pour reconnaître les relations de phase des signaux délivrés par les plages (A, B, C, D) du photodétecteur (5) est présent.

4. Appareil selon la revendication 1, **caractérisé en ce que** une configuration de circuit (11) pour l'alimentation d'un détecteur de relation de phase avec une combinaison variable des signaux de sortie des plages (A, B, C, D) du photodétecteur (5) est présent.

5. Appareil selon la revendication 4, **caractérisé en ce que** le détecteur de relation de phase est le comparateur de phase (14) de l'appareil.

6. Appareil selon la revendication 5, **caractérisé en ce que** un micro-contrôleur (24) est présent, qui commande la configuration de circuit (11) et le réglage des éléments de temporisation (7, 8, 9, 10).

7. Appareil selon la revendication 5, **caractérisé en ce que** à la sortie du comparateur de phase (14), un filtre passe-bas (23) est installé.

8. Procédé pour l'égalisation d'éléments de temporisation réglables (7, 8, 9, 10) d'un appareil pour lire et/ou enregistrer des données de supports d'enregistrement optiques, qui sont affectés à des plages particulières (A, B, C, D) du photodétecteur (5) de l'appareil, où lors d'une première étape de procédé, les relations de phase des signaux délivrés par les différentes plages (A, B, C, D) sont comparées et lors d'une seconde étape de procédé, les temps de temporisation (τA, τB, τC, τD) des éléments de temporisation (7, 8, 9, 10) sont modifiés jusqu'à ce que les phases de tous les signaux soient concordantes avec la phase du dernier signal d'un point de vue temporel et ces temps de temporisation modifiés (τA, τB, τC, τD) sont conservés comme valeurs de réglage optimisées de l'appareil.

9. Procédé selon la revendication 8, où les éléments de temporisation réglables (7, 8, 9, 10) sont réglés, avant la première étape du procédé, sur un temps de temporisation minimal (τi = 0).

10. Procédé selon la revendication 8, où lors de la première étape du procédé, les phases des signaux des plages A et B sont d'abord comparées et si la phase de A est antérieure à la phase de B, les phases des signaux des plages B et C, dans l'autre cas des plages A et C, sont comparées ; si alors la phase de B, ou de A selon le cas, est antérieure à la phase de C, les relations de phase de C et D sont comparées entre elles, dans l'autre cas la phase de B, ou de A selon le cas, est comparée avec celle de D, et à la fin de ces comparaisons on connaît le dernier signal d'un point de vue temporel, sur la relation de phase duquel les autres signaux sont réglés par modification du temps de temporisation (τA, τB, τC, τD) des éléments de temporisation (7, 8, 9, 10) conformément à la seconde étape du procédé.

11. Appareil selon la revendication 1, **caractérisé en ce que** à au moins trois des quatre plages est affecté un élément de temporisation (7, 8, 9, 10).
